# EUROPÄISCHE PATENTSCHRIFT

(11) **EP 3 189 630 B1**
(45) Veröffentlichungstag und Bekanntmachung des Hinweises auf die Patenterteilung: **20.02.2019**
(21) Anmeldenummer: 15756118.4
(22) Anmeldetag: 04.08.2015
(51) Int. Cl.: H04L 12/413, H04L 12/40, H04L 1/00, H04L 12/407, H04L 29/08

(54) **VERFAHREN ZUR SERIELLEN ÜBERTRAGUNG EINES RAHMENS ÜBER EIN BUSSYSTEM VON EINEM SENDER ZU MINDESTENS EINEM EMPFÄNGER UND TEILNEHMERSTATION FÜR EIN BUSSYSTEM**
METHOD FOR SERIALLY TRANSMITTING A FRAME FROM A TRANSMITTER TO AT LEAST ONE RECEIVER VIA A BUS SYSTEM, AND A SUBSCRIBER STATION FOR A BUS SYSTEM
PROCÉDÉ DE TRANSMISSION SÉRIE D'UNE TRAME PAR UN SYSTÈME DE BUS D'UN ÉMETTEUR À AU MOINS UN RÉCEPTEUR ET STATION ABONNÉE POUR UN SYSTÈME DE BUS

(30) Priorität: 03.09.2014 DE 102014217587; 20.05.2015 DE 102015209201
(43) Veröffentlichungstag der Anmeldung: 12.07.2017
(73) Patentinhaber: Robert Bosch GmbH, 70442 Stuttgart (DE)
(72) Erfinder: HARTWICH, Florian, 72762 Reutlingen (DE); HEINEBRODT, Martin, 70499 Stuttgart (DE); HORST, Christian, 72144 Dusslingen (DE); LINDENKREUZ, Thomas, 72766 Reutlingen (DE); SVEJKOVSKY, Peter, 71272 Renningen (DE); MUTTER, Arthur, 73765 Neuhausen (DE)
(86) Internationale Anmeldenummer: PCT/EP2015/067930
(87) Internationale Veröffentlichungsnummer: WO 2016/034350

(56) Entgegenhaltungen:
- US-A1- 2004 081 079

## Beschreibung

### Stand der Technik

US2004/081079 A1 zeigt einen Kommunikationscontroller mit einem Buswächter, der das auf dem Bus angewendete zyklische zeitgesteuerte Flexray-Zugriffsschema überwacht. Mit a priori Wissen kann der Buswächter zwischen einer erlaubten Abweichung und einer verbotenen Abweichung unterscheiden.

Für die Kommunikation zwischen Sensoren und Steuergeräten in Fahrzeugen, insbesondere Automobilen, kann beispielsweise das CAN-Bussystem verwendet werden. Beim CAN-Bussystem werden Nachrichten mittels des CAN- und/oder CAN FD Protokolls übertragen, wie es in dem aktuellen Committee Draft der ISO11898-1 oder der Spezifikation "CAN with Flexible Data-Rate, Specification Version 1.0 (released April 17th, 2012)" als CAN Protokoll-Spezifikation mit CAN FD beschrieben ist.

CAN FD Nachrichten oder Rahmen (Frames) haben nach einem initialen Start of Frame Bit (SOF-Bit) mit dominantem Pegel, das den Beginn des Rahmens signalisiert, ein Bit 28 bis Bit 18 und gegebenenfalls noch ein Bit 17 bis Bit 0 für einen Identifizierer oder Identifier des CAN FD Rahmens. Daher werden das Bit 28 bis Bit 0 auch ID28, ID 27, usw. genannt.

In CRC-Verfahren (CRC = Cyclic Redundancy Check = zyklische Redundanzprüfung) der CAN FD Rahmen wurde eine Schwäche erfasst. Die Schwäche betrifft nur FD Rahmen mit einem Identifier, der mit vier dominanten Bits beginnt. Diese vier dominanten Bits, zusammen mit dem dominanten Start-of-Frame Bit, erzeugen eine Stopf- oder Stuff-Bedingung (stuff condition), aufgrund welcher ein rezessives Stuff-Bit zwischen dem vierten und dem fünften Identifier-Bit eingefügt wird. Durch diese vorbestimmte Regel zum Einfügen der Stuff-Bits kann verhindert werden, dass Bitfolgen mit mehr als fünf gleichen Bits irrtümlich als beispielsweise eine Signalisierung eines Rahmenendes "End of Frame" interpretiert werden, oder dass durch das Fehlen von Signalflanken bzw. Pegelwechseln zwischen den Bits die Busteilnehmer die Synchronisierung verlieren. Denn bei CAN und CAN FD werden Signalflanken bzw. Pegelwechsel zur Synchronisierung der Busteilnehmer herangezogen.

Falls in dem oben genannten Fall der vier dominanten Bits das vorausgehende dominante Start-of-Frame Bit (lokal in einem Empfänger) mit einem rezessiven Bit überschrieben wird, interpretiert dieser Empfänger das erste dominante Identifier-Bit als Start-of-Frame Bit. Es gibt keine Stuff-Bedingung in dem Empfänger, wenn er das rezessive Stuff-Bit empfängt, so dass der Empfänger das rezessive Stuff-Bit als das vierte Identifier-Bit akzeptieren wird. Das folgende Bit wird als das fünfte Identifier-Bit akzeptiert und der Empfänger wird wieder mit dem Sender in Phase sein.

Die Schwäche besteht darin, dass in diesem Fall die CRC-Prüfung das geänderte vierte Identifier-Bit nicht erfassen wird; ein gesendeter Identifier von beispielsweise 0x001 wird als0x081 empfangen. Dies tritt auf, wenn der Identifier mit vier dominanten '0'-Bits beginnt und das dominante Start-of-Frame Bit überschrieben wird. Die sich daraus ergebende Konsequenz wird sein, dass das vierte Identifier-Bit anstelle von ,0' als ,1' empfangen wird. Hierbei sind sowohl 11-Bit-Identifier, wie bei CAN FD Rahmen im Basisformat (base format), als auch 29-Bit-Identifier, wie bei CAN FD Rahmen im erweiterten Format (extended format), und sowohl CAN FD Rahmen mit der 17-Bit-CRC bzw. CRC-17 als auch CAN FD Rahmen mit der 21-Bit CRC bzw. CRC-21 betroffen.

Rahmen im Classic CAN Format sind von dem Problem nicht betroffen, da hier die Stuff-Bits von der CRC-Berechnung ausgeschlossen sind.

Die Schwäche des CRC-Verfahrens wird durch den Initialisierungsvektor von '00000000000000000' für den CRC-Generator verursacht. Das erste führende ,0' Bit wird das CRC-Generatorregister nicht ändern, so dass es durch die CRC-Prüfung nicht erfasst wird, wenn vor dem ersten rezessiven Bit in dem Arbitrationsfeld (das gesendete Stuff-Bit, das von dem Empfänger mit dem BitFehler als das vierte Identifier-Bit angesehen wird) ein Bit weniger vorhanden ist. Außerdem wird das fehlende Bit an dem Beginn des Rahmens nicht als ein Formatfehler erfasst, da das Stuff-Bit als das fehlende Identifier-Bit akzeptiert wird.

### Zusammengefasst bedeutet das:

Bei Classic CAN werden Stuff-Bits für die CRC-Erzeugung nicht berücksichtigt. Lediglich Paare von Bitfehler-Erzeugungs-/Beseitigungs-Stuff-Bedingungen können die Hammingdistanz (HD) auf 2 reduzieren.

Bei CAN FD mit den längeren CRC-Checksummen (CRC-17 und CRC-21) werden Stuff-Bits von der CRC-Erzeugung umfasst. Ein Problem kann entstehen, wenn vom Empfänger das Start-of-Frame Bit verfälscht wird.

In den folgenden beiden Fällen kann es vorkommen, dass die CRC des CAN FD Rahmens einen verfälschten Identifizierer nicht erfasst. Das bedeutet, dass der Empfänger den verfälschten Rahmen als gültigen Rahmen akzeptiert.

### Fall 1a: Sender sendet ID28-ID25 = "0000"

Wenn der Empfänger ein verkürztes Start-of-Frame Bit erfasst, können Identifier, die mit ID28-ID25 = "0000" beginnen, in ID28-ID25 = "0001" verfälscht werden. Der Grund dafür liegt darin, dass der Empfänger Start-of-Frame nicht oder zu spät erkennt und daher ID28 als Start-of-Frame interpretiert. Damit werden die ersten vier Identifier Bits aufgrund des vom Sender nach ID25 eingefügten Stuff-Bits zu ID28-ID25 = "0001" verfälscht, alle nachfolgenden Identifier Bits werden korrekt empfangen. Der Sender erkennt beim Zurücklesen des Start-of-Frame vom Bus keinen Fehler.

Das erforderliche Verkürzen hängt von der CAN-Taktfrequenzbeziehung zwischen Sender und Empfänger ab. Vergleiche die Beispiele für Details.

Das verfälschte Bussignal kann dominante Störimpulse enthalten, solange sie nicht von dem empfangenden CAN-Knoten erfasst werden.

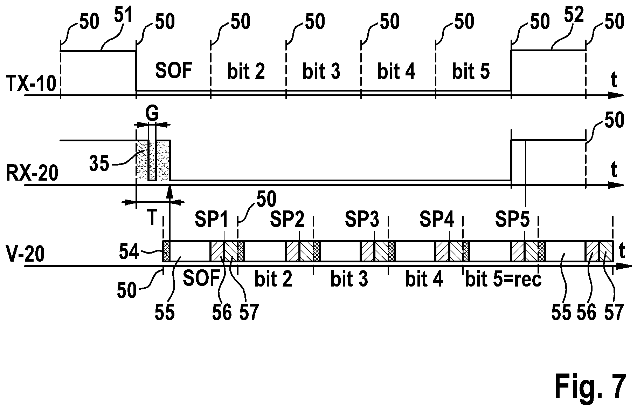

Falls zum Beispiel der CAN-Takt in den Teilnehmerstationen oder Knoten fRX_Knoten == fTX_Knoten ist, dann ist eine Verkürzung/Verfälschung des Start-of-Frame Bits von "phase_seg2 + ε" ausreichend, um das Problem hervorzurufen. Mit 1 Mbit/s und einem Abtastpunkt (Sample Point = SP) von 80% ist eine Verkürzung um 205 ns ausreichend, um das Problem zu erzeugen. Dies ist anhand von Fig. 7 später noch genauer erläutert.

### Fall 1b: Sender sendet ID28-ID25 = "0001"

Wenn andererseits der Empfänger z.B. durch einen dominanten Störimpuls ein dominantes Bit in der Bitzeit erfasst, bevor das gesendete Start-of-Frame Bit ankommt, können Identifier, die mit ID28-ID25 = "0001" beginnen, in ID28-ID25 = "0000" verfälscht werden. Der Grund dafür liegt darin, dass der Empfänger das vom Sender gesendete Start-of-Frame-Bit als ID28 erkennt. Dadurch missinterpretiert der Empfänger die "1" als Stuff-Bit und entfernt diese. Damit werden die ersten vier Identifier Bits zu ID28-ID25 = "0000" verfälscht. Alle nachfolgenden Identifier Bits werden korrekt empfangen.

Zusammengefasst zeigt Tabelle 1, wie die beiden kritischen Werte der Identifier-Bits ID28 bis ID25 von "0000" und "0001" auf dem Weg zum Empfänger verfälscht werden müssen, damit der Fehler vom CRC des Empfängers nicht erkannt wird.

**Tabelle 1**

| Gesendet | | | | | Empfangen | | | |
|---|---|---|---|---|---|---|---|---|
| ID28 | ID27 | ID26 | ID25 | | ID28 | ID27 | ID26 | ID25 |
| 0 | 0 | 0 | 0 | → | 0 | 0 | 0 | 1 |
| 0 | 0 | 0 | 1 | → | 0 | 0 | 0 | 0 |

Eine vergleichbare Situation kann auch innerhalb eines CAN FD Rahmens entstehen, wenn ein rezessives Bit nach einer Folge von vier gesendeten dominanten Bits vom Empfänger wegen einer Verkürzung eines Bits oder einer Verschiebung in der Synchronisierung unter den Teilnehmern als Stuff-Bit missinterpretiert wird und gleichzeitig zufällig der Zwischen-CRC-Registerwert gleich "0...0" ist. Der Zwischen-CRC-Registerwert ist der jeweils in dem dafür vorgesehenen CRC-Register vorliegende Wert der CRC-Checksumme. Mit jedem vor dem CRC-Feld gesendeten bzw. empfangenen Bit im Sender bzw. Empfänger wird entsprechend der Vorschrift des jeweils verwendeten CRC-Polynoms der Inhalt des CRC-Registers neu berechnet. Der am letzten Bit des Datenfeldes vorliegende Inhalt des Registers wird dann im CRC-Feld der Nachricht vom Sender an den Empfänger zur Prüfung verschickt.

### Offenbarung der Erfindung

Daher ist es Aufgabe der vorliegenden Erfindung, ein Verfahren zur seriellen Übertragung eines Rahmens über ein Bussystem von einem Sender zu mindestens einem Empfänger und eine Teilnehmerstation für ein Bussystem bereitzustellen, welches Verfahren und welche Teilnehmerstation die zuvor genannten Probleme lösen. Insbesondere sollen ein Verfahren zur seriellen Übertragung eines Rahmens über ein Bussystem von einem Sender zu mindestens einem Empfänger und eine Teilnehmerstation für ein Bussystem bereitgestellt werden, bei welchen die Sicherheit der Datenübertragung zwischen Teilnehmern eines Bussystems gegenüber bisherigen Verfahren weiter erhöht wird.

Die Aufgabe wird durch ein Verfahren zur seriellen Übertragung eines Rahmens über eine Busleitung von einem Sender zu mindestens einem Empfänger mit den Merkmalen des Anspruchs 1 gelöst. Bei dem Verfahren werden vom Sender in den Rahmen gemäß einer vorbestimmten Regel Stuff-Bits zur Erzeugung zusätzlicher Signalflanken eingefügt, wobei vom Empfänger die Stuff-Bits bei einer Auswertung des empfangenen Rahmens wieder entfernt werden, wobei eine CRC Berechnungslogik eines CRC-Generators eine CRC-Checksumme berechnet, die der Rahmen umfasst, und wobei in einem Auswertungsschritt vor der Auswertung des nächsten übertragenen Bits ein Wert "1" in die CRC Berechnungslogik der CRC-Checksumme eingefügt wird, wenn in der durch die CRC Berechnungslogik ausgeführten laufenden Berechnung ein Wert von "0....0" für die CRC-Checksumme festgestellt wird.

Die Erfindung beschreibt ein Verfahren, wie der CRC-Algorithmus erweitert werden kann, um im Falle einer fehlerhaften Abtastung, die ein Stuff-Bit missinterpretiert, diesen Fehler sicher zu erkennen.

Der Vorteil liegt in der sicheren Erkennung von Bitfehlern, im Falle einer falschen Abtastung.

Die Verwendung des beschriebenen Verfahrens lässt sich einerseits über das Datenblatt/Handbuch des CAN-Protokoll-Controllers nachweisen, andererseits durch das Verhalten des Controllers bzw. der Kommunikationssteuereinrichtung im Netzwerk bzw. Bussystem. Die hier beschriebene CAN FD-Protokoll-Variante soll für CAN und für TTCAN Netzwerke bzw. Bussysteme verwendet werden.

Vorteilhafte weitere Ausgestaltungen des Verfahrens sind in den abhängigen Patentansprüchen angegeben.

In einer speziellen Ausgestaltung kann ein Initialisierungsvektor der CRC-Checksumme den Wert "1...0" haben.

Möglicherweise weist der Rahmen einen Kopfteil, einen Datenteil und einen Schlussteil auf, und/oder es ist möglich, dass der Kopfteil einen Identifier aufweist.

Es ist auch möglich, dass der Rahmen ein CAN Rahmen oder ein TTCAN Rahmen oder ein CAN FD Rahmen ist.

Die zuvor genannte Aufgabe wird zudem durch eine Teilnehmerstation für ein Bussystem nach Patentanspruch 5 gelöst. Die Teilnehmerstation umfasst eine Sende-/Empfangseinrichtung zum Senden eines Rahmens an und/oder Empfangen eines Rahmens von eine/r weitere/n Teilnehmerstation des Bussystems, mit welchem der Rahmen mittels serieller Übertragung über eine Busleitung von einem Sender zu mindestens einem Empfänger übertragbar ist, und eine Sicherungseinrichtung zur Sicherung einer CRC-Checksumme des Rahmens, die von einer CRC Berechnungslogik eines CRC-Generators zu berechnen ist, wobei die Sende-/Empfangseinrichtung ausgestaltet ist, vor dem Senden eines Rahmens in den Rahmen gemäß einer vorbestimmten Regel Stuff-Bits zur Erzeugung zusätzlicher Signalflanken einzufügen und/oder beim Auswerten eines empfangenen Rahmens die Stuff-Bits wieder zu entfernen, wobei die Sicherungseinrichtung ausgestaltet ist, in einem Auswertungsschritt vor der Auswertung des nächsten übertragenen Bits einen Wert "1" in die CRC Berechnungslogik der CRC-Checksumme einzufügen, wenn in der durch die CRC Berechnungslogik ausgeführten laufenden Berechnung ein Wert von "0....0" für die CRC-Checksumme festgestellt wird.

Die Teilnehmerstation kann Teil eines Bussystems sein, das zudem eine Busleitung und mindestens zwei Teilnehmerstationen aufweist, welche über die Busleitung derart miteinander verbindbar sind, dass sie miteinander kommunizieren können, wobei mindestens eine der mindestens zwei Teilnehmerstationen die zuvor beschriebene Teilnehmerstation ist.

Weitere mögliche Implementierungen der Erfindung umfassen auch nicht explizit genannte Kombinationen von zuvor oder im Folgenden bezüglich der Ausführungsbeispiele beschriebenen Merkmale oder Ausführungsformen. Dabei wird der Fachmann auch Einzelaspekte als Verbesserungen oder Ergänzungen zu der jeweiligen Grundform der Erfindung hinzufügen.

### Zeichnungen

Nachfolgend ist die Erfindung unter Bezugnahme auf die beiliegende Zeichnung und anhand von Ausführungsbeispielen näher beschrieben. Es zeigen:
Fig. 1 ein vereinfachtes Blockschaltbild eines Bussystems gemäß einem ersten Ausführungsbeispiel;
Fig. 2 eine schematische Darstellung eines Aufbaus eines Rahmens bei dem Bussystem gemäß Fig. 1;
Fig. 3 bis Fig. 6 jeweils das Format von CAN FD Rahmen mit der Platzierung der ersten vier Identifier Bits (ID28-ID25) gemäß dem aktuellen Committee Draft der ISO 11898-1; und
Fig. 7 ein Zeitverlaufsdiagramm zur Darstellung der Taktverhältnisse zwischen Sender und Empfänger am Beginn eines übertragenen Rahmens in dem Bussystem gemäß Fig. 1.

In den Figuren sind gleiche oder funktionsgleiche Elemente, sofern nichts anderes angegeben ist, mit denselben Bezugszeichen versehen.

### Erstes Ausführungsbeispiel

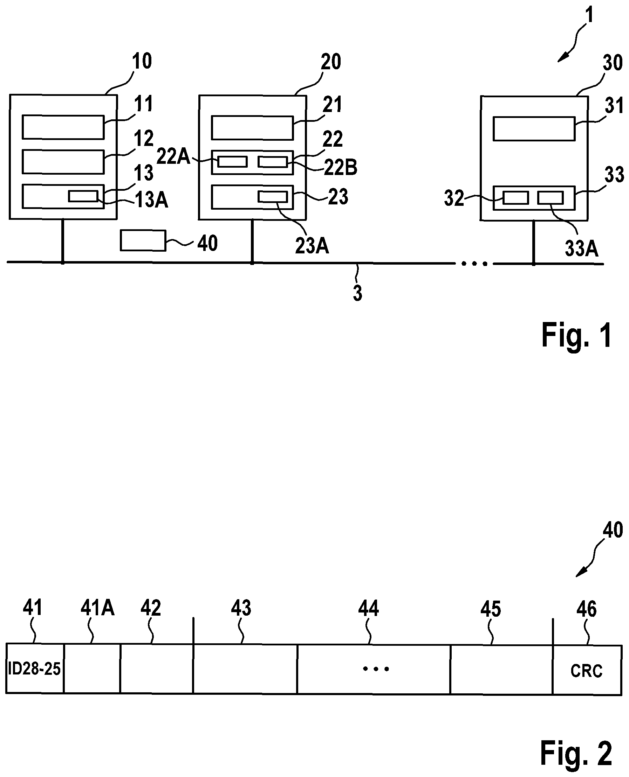

Fig. 1 zeigt in einem ersten Ausführungsbeispiel ein Bussystem 1, das beispielsweise ein CAN FD-Bussystem, sein kann. Das Bussystem 1 kann in einem Fahrzeug, insbesondere einem Kraftfahrzeug, einem Flugzeug, usw., oder im Krankenhaus usw. Verwendung finden.

In Fig. 1 hat das Bussystem 1 eine Busleitung 3, an die eine Vielzahl von Teilnehmerstationen 10, 20, 30 angeschlossen sind. Über die Busleitung 3 können Rahmen 40 in der Form von Signalen zwischen den einzelnen Teilnehmerstationen 10, 20, 30 übertragen werden. Die Teilnehmerstationen 10, 20, 30 können beispielsweise Steuergeräte, Sensoren, Anzeigevorrichtungen, usw. eines Kraftfahrzeugs oder auch industrielle Steueranlagen sein.

Wie in Fig. 1 gezeigt, hat die Teilnehmerstation 10 eine Kommunikationssteuereinrichtung 11, eine Sicherungseinrichtung 12 und eine Sende-/Empfangseinrichtung 13, die einen CRC-Generator 13A aufweist. Selbstverständlich kann die Sicherungseinrichtung 12 auch Teil der Kommunikationssteuereinrichtung 11 sein. Die Teilnehmerstation 20 hat dagegen eine Kommunikationssteuereinrichtung 21, eine Sicherungseinrichtung 22 mit einer CRC-Auswerteeinheit 22A und einer Einfügeeinheit 22B, und eine Sende-/Empfangseinrichtung 23, die einen CRC-Generator 23A aufweist. Die Teilnehmerstation 30 hat eine Kommunikationssteuereinrichtung 31, eine Sicherungseinrichtung 32 und eine Sende-/Empfangseinrichtung 33, welche die Sicherungseinrichtung 32 und eine einen CRC-Generator 33A aufweist. Die Sende-/Empfangseinrichtungen 13, 23, 33 der Teilnehmerstationen 10, 20, 30 sind jeweils direkt an die Busleitung 3 angeschlossen, auch wenn dies in Fig. 1 nicht dargestellt ist.

Die Kommunikationssteuereinrichtungen 11, 21, 31 dienen jeweils zur Steuerung einer Kommunikation der jeweiligen Teilnehmerstation 10, 20, 30 über die Busleitung 3 mit einer anderen Teilnehmerstation der an die Busleitung 3 angeschlossenen Teilnehmerstationen 10, 20, 30. Die Kommunikationssteuereinrichtungen 11, 21, 31 können jeweils wie ein herkömmlicher CAN oder TTCAN oder CAN FD Kontroller ausgeführt sein. Die Kommunikationssteuereinrichtungen 11, 21, 31 können jeweils auch als Teil eines Mikrocontrollers ausgebildet sein, welcher ebenfalls von der jeweiligen Teilnehmerstation 10, 20, 30 umfasst ist.

Die Sende-/Empfangseinrichtungen 13, 23, 33 können jeweils wie ein herkömmlicher CAN oder TTCAN oder CAN FD Transceiver ausgeführt sein.

Die Sicherungseinrichtungen 12, 22, 32 können auch als Software-Module ausgeführt sein, welche einen Teil der auf der Teilnehmerstation ablaufenden Software bilden. In diesem Fall wird das Verfahren gemäß der vorliegenden Erfindung vollständig in Software abgebildet.

Fig. 2 zeigt sehr schematisch den Aufbau eines Rahmens 40 ohne das Start of Frame Bit (SOF), das unmittelbar vor dem Rahmen 40 über die Busleitung 3 übertragen wird. Der Rahmen 40 kann ein CAN Rahmen oder ein TTCAN Rahmen sein.

In Fig. 2 hat der Rahmen 40 ein Kopfteil 41, 41A, 42, ein Datenfeld 43, 44, 45, sowie ein Schlussteil 46, welches das Rahmenende bildet. Der Kopfteil 41, 51A, 42 weist in einem ersten Teilabschnitt 41 die ersten vier Bits des Identifiers (ID) 41, 41A, in einem zweiten Teilabschnitt 41A die übrigen Bits des Identifiers 41, 41A und ein Control Feld 42 auf. Das Datenfeld 43, 44, 45 weist in einem ersten Teil 43 ein Byte 0, in einem zweiten Teil 44 weitere Bytes und in einem dritten Teil 45 ein Byte n auf. In dem Schlussteil 46 ist eine CRC-Checksumme oder CRC-Prüfsumme vorgesehen.

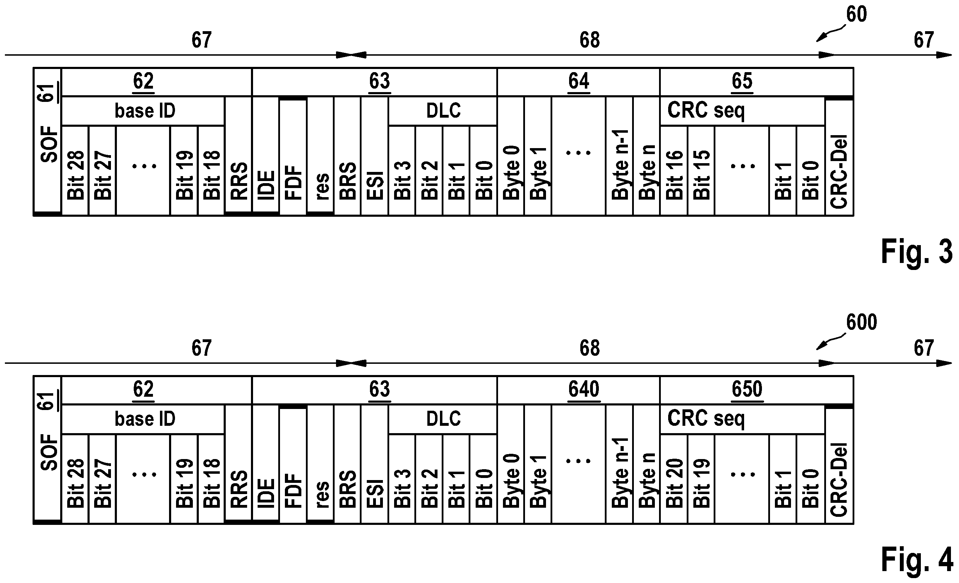

Fig. 3 zeigt einen von einer der Teilnehmerstationen 10, 20, 30 gesendeten Rahmen 60 mit bis zu 16 Datenbytes im CAN FD-Basisformat. Der Rahmen 60 hat ein SOF-Bit 61 sowie mehrere Rahmenfelder, wie ein Arbitrationsfeld 62 (Arbitration field), ein Control Feld 63 (Control field), ein Datenfeld 64 (Data field) und ein Checksummenfeld 65 (CRC field). Das Arbitrationsfeld 62 umfasst in dem base-ID-Feld einen Identifizierer (Identifier) des Rahmens 60. Am Ende des Arbitrationsfelds 62 ist ein RRS-Bit angeordnet. Das Kontrollfeld 63 beginnt mit einem IDE-Bit, das von einem FDF-Bit und dann von einem res-Bit und einem sich daran anschließenden BRS-Bit und dann ESI-Bit gefolgt wird, an das sich ein DLC-Feld anschließt. Das Datenfeld 64 ist nicht vorhanden, wenn das DLC-Feld des Kontrollfelds 63 den Wert 0 hat. Das Checksummenfeld 65 enthält in einem CRC-seq-Feld eine CRC-Checksumme und endet mit einem daran anschließenden CRC-Delimiter CRC-Del. Die genannten Felder und Bits sind aus der ISO-CD-11898-1 bekannt und sind daher hier nicht näher beschrieben.

In Fig. 3 ist die Länge einer Arbitrationsphase 67 bei dem vorliegenden Ausführungsbeispiel angegeben. An die Arbitrationsphase 67 schließt sich die Datenphase 68 an, falls das BRS-Bit in dem Rahmen 60 rezessiv ist. Der Rahmen 60 hat einen Kopfteil 61 bis 63, einen Datenteil 64 und einen Schlussteil 65.

In Fig. 3 bis Fig. 6 sind dominante Bits mit einer breiten Linie am unteren Rand des Rahmens 60 dargestellt. Rezessive Bits sind in Fig. 3 bis Fig. 6 mit einer breiten Linie am oberen Rand des Rahmens 60 dargestellt.

Wie in Fig. 3 gezeigt, hat die zugehörige Kommunikationssteuereinrichtung 11, 21, 31 des Senders den Rahmens 60 derart erstellt, dass das SOF-Bit, das RRS-Bit, das IDE-Bit und das res-Bit dominant sind, wohingegen das FDF-Bit und der CRC-Delimiter CRC-Del rezessiv sind.

Fig. 4 zeigt einen von einer der Teilnehmerstationen 10, 20, 30 gesendeten Rahmen 600 mit mehr als 16 Datenbytes im CAN FD-Basisformat. Der Rahmen 600 ist bis auf ein im Vergleich zu dem Datenfeld 64 längeres Datenfeld 640 und ein im Vergleich zu dem Checksummenfeld 65 längeres Checksummenfeld 650 auf die gleiche Weise aufgebaut wie der Rahmen 60 von Fig. 3. Der Rahmen 600 hat einen Kopfteil 61 bis 63, einen Datenteil 640 und einen Schlussteil 650.

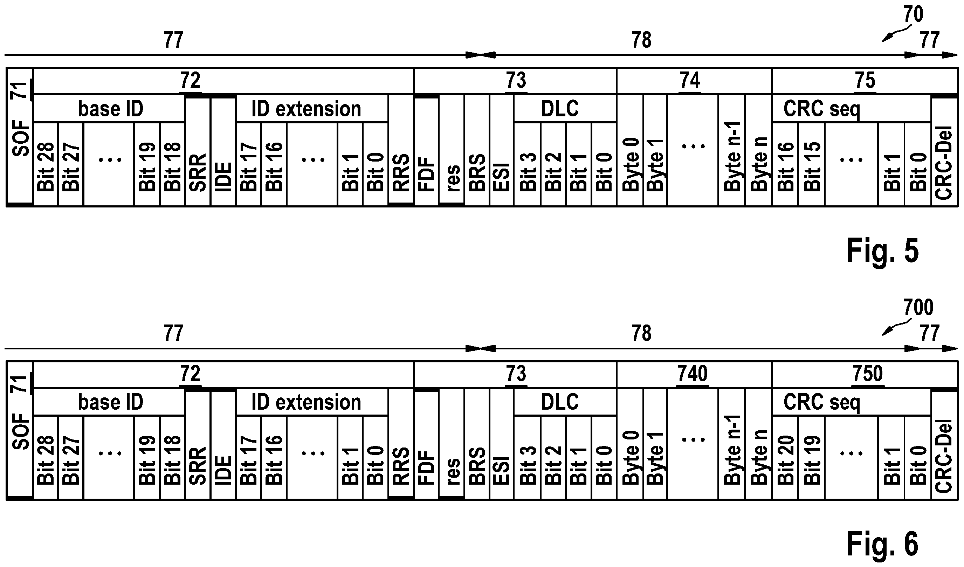

Fig. 5 zeigt einen von einer der Teilnehmerstationen 10, 20, 30 gesendeten Rahmen 70 mit bis zu 16 Datenbytes im CAN FD erweiterten Format (CAN FD extended format). Gemäß Fig. 5 hat der Rahmen 70 ein SOF-Bit 71 sowie mehrere Rahmenfelder, wie ein Arbitrationsfeld 72 (Arbitration field), ein Control Feld 73 (Control field), ein Datenfeld 74 (Data field) und ein Checksummenfeld 75 (CRC field). Das Arbitrationsfeld 72 umfasst in dem base-ID-Feld und dem ID-ext-Feld einen Identifizierer (Identifier) des Rahmens 70. Zwischen dem base-ID-Feld und dem ID-ext-Feld sind ein SRR-Bit und ein IDE-Bit vorgesehen. Am Ende des Arbitrationsfelds 72 ist ein RRS-Bit angeordnet. Das Control Feld 73 beginnt mit einem FDF-Bit, gefolgt von einem res-Bit. Darauf folgt ein BRS-Bit und ein ESI-Bit. Das Control Feld 73 endet mit dem DLC-Feld. Das Datenfeld 74 ist nicht vorhanden, wenn das DLC-Feld des Control Felds 73 den Wert 0 hat. Ansonsten ist der Rahmen 70 auf die gleiche Weise aufgebaut wie der Rahmen 60 von Fig. 3 und hat eine entsprechende Arbitrationsphase 77 und Datenphase 78. Der Rahmen 70 hat einen Kopfteil 71 bis 73, einen Datenteil 74 und einen Schlussteil 75.

Wie in Fig. 5 gezeigt, hat die zugehörige Kommunikationssteuereinrichtung 11, 21, 31 des Senders den Rahmen 70 derart erstellt, dass das SOF-Bit, das RRS-Bit und das res-Bit dominant sind, wohingegen das SRR-Bit, das IDE-Bit und der CRC-Delimiter CRC-Del rezessiv sind

Fig. 6 zeigt einen von einer der Teilnehmerstationen 10, 20, 30 gesendeten Rahmen 700 mit mehr als 16 Datenbytes im CAN FD erweiterten Format (CAN FD extended format). Der Rahmen 700 ist bis auf ein im Vergleich zu dem Datenfeld 74 längeres Datenfeld 740 und ein im Vergleich zu dem Checksummenfeld 75 längeres Checksummenfeld 750 auf die gleiche Weise aufgebaut wie der Rahmen 70 von Fig. 5. Der Rahmen 700 hat einen Kopfteil 71 bis 73, einen Datenteil 740 und einen Schlussteil 750.

Die CRC-Prüfsumme wird für CAN FD Rahmen 60, 600 im Basisformat, die in Fig. 3 und Fig. 4 gezeigt sind, als CRC-17 bezeichnet. Die CRC-Prüfsumme wird für CAN FD Rahmen 70, 700 im erweiterten Format, die in Fig. 5 und Fig. 6 gezeigt sind, als CRC-21 bezeichnet.

Fig. 7 zeigt als Beispiel die Verläufe des Sendesignals TX-10 der Teilnehmerstation 10, des Empfangssignals RX-20 der Teilnehmerstation 20 und die Abtastsicht V-20 der Teilnehmerstation 20 jeweils über der Zeit t. Die gestrichelte Linie in Fig. 7 gibt jeweils die Bitgrenze 50 zwischen einzelnen Bits an. Aus Gründen der übersichtlichen Darstellung sind für das Empfangssignals RX-20 und die Abtastsicht V-20 nicht alle gestrichelten Linien für die Bitgrenze 50 mit einem Bezugszeichen versehen.

In Fig. 7 ist der Fall gezeigt, dass auf der Busleitung 3 zunächst ein Leerlaufbit 51 gesendet wird, bevor das Sendesignal TX-10 mit einem Start-of-Frame-Bit (SOF-Bit) beginnt. Darauf folgen ein bit2 bis bit5 mit dem gleichen Pegel wie das Start-of-Frame-Bit. Nach dem bit5 ist ein Stuff-Bit 52 eingefügt.

Demzufolge ergibt sich mit einer nicht dargestellten Verzögerung, die durch die Übertragung des Sendesignals TX-10 über die Busleitung 3 entsteht, das dem Sendesignal TX-10 entsprechende Empfangssignal RX-20. Dieses Empfangssignal RX-20 kann aus verschiedenen Gründen (Hardwarefehler, externe Störungen, elektromagnetische Einstrahlung, etc.) für eine Zeitdauer T einen rezessiven Pegel aufweisen, obwohl das Sendesignal einen dominanten Pegel des SOF-Bits aufweist. In dem so verfälschten Empfangssignal RX-20 können zusätzlich kurze Störimpulse G vorhanden sein, welche das Bussignal 35 weiter verfälschen, wie in Fig. 7 gezeigt. Solche Störimpulse G können beispielsweise ebenfalls durch externe Störungen (elektromagnetische Einstrahlung etc.) entstehen und werden möglicherweise (zum Beispiel, falls sie kürzer als die kleinste Buszeiteinheit von einem Time Quantum tq sind) durch die empfangende Teilnehmerstation, also hier die Teilnehmerstation 20, nicht erfasst. Das Empfangssignal RX-20 bleibt verfälscht.

Die Teilnehmerstation 20 sieht aufgrund des verfälschten Empfangssignals RX-20 das Signal V-20. Nach der Bitgrenze 50 für das SOF-Bit folgt eine mit dem Bezugszeichen 54 versehene sync_seg-Phase. Darauf folgt eine Übertragungsphase prop_seg, die in Fig. 7 mit dem Bezugszeichen 55 versehen ist. Darauf folgt eine mit dem Bezugszeichen 56 versehene phase_seg1 und eine mit dem Bezugszeichen 57 versehene phase_seg2. Die Reihenfolge der genannten Phasen 54 bis 57 ist für jedes der Bits gleich.

Die Teilnehmerstation 20 tastet das Empfangssignal RX-20 an Abtastpunkten SP1, SP2, SP3, SP4, SP5 ab. Die Abtastpunkte SP1 bis SP5 liegen zwischen der mit dem Bezugszeichen 56 versehenen phase_seg1 und der mit dem Bezugszeichen 57 versehenen phase_seg2.

Bei dem in Fig. 7 gezeigten Fall ist der CAN-Takt in den Teilnehmerstationen 10, 20, 30, die auch als Knoten bezeichnet werden, fRX_Knoten == fTX_Knoten. Das heißt, der Empfangstakt entspricht dem Sendetakt. Hier ist eine Verkürzung/Verfälschung des Start-of-Frame-Bits (SOF) von "phase_seg2 + ε" ausreichend, um das hier betrachtete Problem hervorzurufen. Der fünfte Abtastpunkt SP5 ergibt im dargestellten Fall fälschlicherweise einen rezessiven Wert. Mit 1 Mbit/s und einem Abtastpunkt SP (SP = Sample Point) für die Abtastpunkte SP1, SP2, SP3, SP4, SP5 von 80% ist eine Verkürzung um 205 ns ausreichend, um das hier betrachtete Problem zu erzeugen, wie zuvor beschrieben.

Bei dem vorliegenden Ausführungsbeispiel kann zur_Lösung des zuvor beschriebenen Problems für CRC-17 und CRC-21 als Initialisierungsvektor des CRC-Generators 13A, 23A, 33A anstelle von "0...0" der Initialisierungsvektor "1...0" verwendet werden. Die Initialisierung kann mit den Sicherungseinrichtungen 12, 22, 32, bei der Sicherungseinrichtung 22 insbesondere mit der CRC-Auswerteeinheit 22A und der Einfügeeinheit 22B, vorgenommen werden.

Dadurch können die Probleme in Bezug auf die beiden kritischen Werte der Identifier-Bits ID28 bis ID25 von "0000" und "0001" nicht mehr auftreten.

Als ergänzende oder alternative Lösung für das betrachtete Problem wird folgendermaßen vorgegangen:
Wenn ein CRC-Wert von "0...0" erfasst wird, wird eine "1" in die CRC-Logik bei einer zusätzlichen Auswertung des CRC-Mechanismus eingefügt. Dies wird vor der Auswertung des nächsten empfangenen/gesendeten Bits vorgenommen.

Anders ausgedrückt, die betroffene CRC Berechnungslogik des CRC-Generators 13A, 23A, 33A berechnet die CRC-Checksumme. Wenn in der durch die CRC Berechnungslogik des CRC-Generators 13A, 23A, 33A ausgeführten laufenden Berechnung mit der zugehörigen Sicherungseinrichtung 12, 22, 32 ein CRC-Wert von "0....0" festgestellt wird, wird ein Wert "1" in die CRC Berechnungslogik in einem zusätzlichen Auswertungsschritt eingefügt. Bei der Teilnehmerstation 20 kann das Feststellen des CRC-Werts von "0....0" mit der CRC-Auswerteeinheit 22A ausgeführt werden. Das Einfügen des Werts "1" in die CRC Berechnungslogik kann mit der Einfügeeinheit 22B ausgeführt werden.

Diese eingefügte "1" kann als ein virtuelles Stuff-Bit angesehen werden, das nur für die CRC-Logik sichtbar ist. Aufgrund dieses Einfügens ist der CRC-Wert nicht mehr "0...0", wenn das nächste empfangene/gesendete Bit ankommt.

### Zweites Ausführungsbeispiel

Bei einem zweiten Ausführungsbeispiel ist das Bussystem 1 auf die gleiche Weise aufgebaut, wie bei dem ersten Ausführungsbeispiel beschrieben. Im Unterschied dazu wird jedoch bei dem zweiten Ausführungsbeispiel das Problem betrachtet, das entstehen kann, wenn innerhalb eines CAN FD Rahmens ein rezessives Bit nach einer Folge von vier gesendeten dominanten Bits vom Empfänger wegen einer Verkürzung eines Bits oder einer Verschiebung in der Synchronisierung unter den Teilnehmern als Stuff-Bit missinterpretiert wird und gleichzeitig zufällig der Zwischen-CRC-Registerwert gleich "0...0" ist. Der Zwischen-CRC-Registerwert des CRC-Generators 13A, 23A, 33A gleich "0...0" tritt auf, wenn die laufend durchgeführte Berechnung der CRC-Checksumme den Wert "0...0" ergibt.

### Zwei Fälle sind zu unterscheiden:

Fall 2a tritt auf, falls der Zwischen-CRC-Registerwert gleich "0...0" ist, während eine stuffed Sequenz von "0"-en gesendet wird und das erste dieser "0"-Bits durch Synchronisation verkürzt wird. Demzufolge wird eine Bitsequenz von "00000I" ("I" steht hier für ein gesendetes Stuff-Bit) vom Empfänger verfälscht als "00001" abgetastet. Dieser Fehler wird durch die CRC nicht erfasst.

Fall 2b tritt auf, falls der Zwischen-CRC-Registerwert gleich "0...0" ist, während eine nicht gestuffte Sequenz "00001" gesendet wird und der Empfänger eine zusätzliche "0" abtastet. Dann wird die "1" als eine Stuff-"1" interpretiert und demzufolge wird die gesendete Bitsequenz von "00001" vom Empfänger verfälscht als "00000I" ("I" steht hier für ein empfangenes - vermeintliches - Stuff-Bit) abgetastet. Diese Einfügung wird durch die CRC nicht erfasst.

Das Problem kann bei einer beliebigen Bitposition zwischen Start-of-Frame und der gesendeten CRC-Checksumme auftreten. Mit dem Initialisierungsvektor "1...0", der bei dem ersten Ausführungsbeispiel beschrieben ist, kann ein Zwischen-CRC-Registerwert gleich "0...0" für die ersten 18 gesendeten Bits nicht auftreten.

Als Lösung für das bei dem zweiten Ausführungsbeispiel betrachtete Problem wird folgendermaßen vorgegangen.

Wenn ein CRC-Wert von "0...0" erfasst wird, wird eine "1" in die CRC-Logik bei einer zusätzlichen Auswertung des CRC-Mechanismus eingefügt. Dies wird vor der Auswertung des nächsten empfangenen/gesendeten Bits vorgenommen.

Anders ausgedrückt, die betroffene CRC Berechnungslogik des CRC-Generators 13A, 23A, 33A berechnet die CRC-Checksumme. Wenn in der durch die CRC Berechnungslogik des CRC-Generators 13A, 23A, 33A ausgeführten laufenden Berechnung mit der zugehörigen Sicherungseinrichtung 12, 22, 32 ein CRC-Wert von "0....0" festgestellt wird, wird ein Wert "1" in die CRC Berechnungslogik in einem zusätzlichen Auswertungsschritt eingefügt. Bei der Teilnehmerstation 20 kann das Feststellen des CRC-Werts von "0....0" mit der CRC-Auswerteeinheit 22A ausgeführt werden. Das Einfügen des Werts "1" in die CRC Berechnungslogik kann mit der Einfügeeinheit 22B ausgeführt werden.

Diese eingefügte "1" kann als ein virtuelles Stuff-Bit angesehen werden, das nur für die CRC-Logik sichtbar ist.

Aufgrund dieses Einfügens ist der CRC-Wert nicht mehr "0...0", wenn das nächste empfangene/gesendete Bit ankommt.

Alle zuvor beschriebenen Ausgestaltungen des Bussystems 1, der Teilnehmerstationen 10, 20, 30 und des Verfahrens können einzeln oder in allen möglichen Kombinationen Verwendung finden. Insbesondere können alle Merkmale der zuvor beschriebenen Ausführungsbeispiele beliebig kombiniert oder weggelassen werden. Zusätzlich sind insbesondere folgende Modifikationen denkbar.

Das zuvor beschriebene Bussystem 1 gemäß den Ausführungsbeispielen ist anhand eines auf dem CAN FD Protokoll basierenden Bussystems beschrieben. Das Bussystem 1 gemäß den Ausführungsbeispielen kann jedoch auch eine andere Art von Kommunikationsnetz sein. Es ist vorteilhaft, jedoch nicht zwangsläufige Voraussetzung, dass bei dem Bussystem 1 zumindest für bestimmte Zeitspannen ein exklusiver, kollisionsfreier Zugriff einer Teilnehmerstation 10, 20, 30 auf einen gemeinsamen Kanal gewährleistet ist.

Die Anzahl und Anordnung der Teilnehmerstationen 10 bis 30 in dem Bussystem 1 der Ausführungsbeispiele und deren Modifikationen ist beliebig. Insbesondere können auch nur Teilnehmerstationen 10 oder 20 oder 30 in dem Bussystem 1 vorhanden sein. Es sind beliebige Kombinationen der Teilnehmerstationen 10 bis 30 in den Bussystemen 1 möglich.

Die Sicherungseinrichtungen 12, 22, 32 können, anstelle der für sie in Fig. 1 gezeigten Ausführung, jeweils auch in der zugehörigen Kommunikationssteuereinrichtung 11, 21, 31 vorgesehen sein. Auch eine oder mehrere solcher Teilnehmerstationen kann/können alternativ oder zusätzlich zu den Teilnehmerstationen 10, 20, 30 in beliebiger Kombination mit den Teilnehmerstationen 10, 20, 30 in dem Bussystem 1 vorhanden sein.

## Patentansprüche

1. Verfahren zur seriellen Übertragung eines Rahmens (40; 60; 70; 600; 700) über eine Busleitung (3) von einem Sender zu mindestens einem Empfänger,
wobei vom Sender in den Rahmen (40; 60; 70; 600; 700) gemäß einer vorbestimmten Regel Stuff-Bits (52) zur Erzeugung zusätzlicher Signalflanken eingefügt werden,
wobei vom Empfänger die Stuff-Bits (52) bei einer Auswertung eines empfangenen Rahmens (40; 60; 70; 600; 700) wieder entfernt werden,
wobei eine CRC Berechnungslogik eines CRC-Generators (13A; 23A; 33A) eine CRC-Checksumme berechnet, die der Rahmen (40; 60; 70; 600; 700) umfasst, und
wobei in einem Auswertungsschritt vor der Auswertung des nächsten übertragenen Bits ein Wert "1" in die CRC Berechnungslogik der CRC-Checksumme eingefügt wird, wenn in der durch die CRC Berechnungslogik ausgeführten laufenden Berechnung ein Wert von "0....0" für die CRC-Checksumme festgestellt wird.

2. Verfahren nach Anspruch einem der vorangehenden Ansprüche,
wobei ein Initialisierungsvektor der CRC-Checksumme den Wert "1...0" hat.

3. Verfahren nach einem der vorangehenden Ansprüche,
wobei der Rahmen (40; 60; 70; 600; 700) einen Kopfteil (41, 41A, 42; 61 bis 63; 71 bis 73), einen Datenteil (43, 44, 45; 64; 74; 640; 740) und einen Schlussteil (46; 65; 75; 650; 750) aufweist, und/oder wobei der Kopfteil (41, 41A, 42; 61 bis 63; 71 bis 73) einen Identifier (41, 41A; 62; 72) aufweist.

4. Verfahren nach einem der vorangehenden Ansprüche,
wobei der Rahmen (40; 60; 70; 600; 700) ein CAN Rahmen (40) oder ein TTCAN Rahmen (40) oder ein CAN FD Rahmen (60; 70; 600; 700) ist.

5. Teilnehmerstation (10; 20; 30) für ein Bussystem (1), mit einer Sende-/Empfangseinrichtung (13; 23; 33) zum Senden eines Rahmens (40; 60; 70; 600; 700) an und/oder Empfangen eines Rahmens (40; 60; 70; 600; 700) von eine/r weitere/n Teilnehmerstation des Bussystems (1), mit welchem der Rahmen (40; 60; 70; 600; 700) mittels serieller Übertragung über eine Busleitung (3) von einem Sender zu mindestens einem Empfänger übertragbar ist, und
einer Sicherungseinrichtung (12; 22; 32) zur Sicherung einer CRC-Checksumme des Rahmens (40; 60; 70; 600; 700), die von einer CRC Berechnungslogik eines CRC-Generators (13A; 23A; 33A) zu berechnen ist, wobei die Sende-/Empfangseinrichtung (13; 23; 33) ausgestaltet ist, vor dem Senden eines Rahmens (40; 60; 70; 600; 700) in den Rahmen (40; 60; 70; 600; 700) gemäß einer vorbestimmten Regel Stuff-Bits (52) zur Erzeugung zusätzlicher Signalflanken einzufügen und/oder beim Auswerten eines empfangenen Rahmens (40; 60; 70; 600; 700) die Stuff-Bits (52) wieder zu entfernen,
wobei die Sicherungseinrichtung (12; 22; 32) ausgestaltet ist, in einem Auswertungsschritt vor der Auswertung des nächsten übertragenen Bits einen Wert "1" in die CRC Berechnungslogik der CRC-Checksumme einzufügen, wenn in der durch die CRC Berechnungslogik ausgeführten laufenden Berechnung ein Wert von "0....0" für die CRC- Checksumme festgestellt wird.

6. Bussystem (1), mit
einer Busleitung (3), und
mindestens zwei Teilnehmerstationen (10, 20, 30), welche über die Busleitung (3) derart miteinander verbindbar sind, dass sie miteinander kommunizieren können,
wobei mindestens eine der mindestens zwei Teilnehmerstationen (10, 20, 30) eine Teilnehmerstation (10; 20; 30) nach Anspruch 5 ist.

## Claims

1. A method for the serial transmission of a frame (40; 60; 70; 600; 700) from a transmitter to at least one receiver via a bus line (3),
stuff bits (52) being inserted into the frame (40; 60; 70; 600; 700) by the transmitter according to a predetermined rule to generate additional signal edges,
the stuff bits (52) being removed again by the receiver in an evaluation of a frame (40; 60; 70; 600; 700) received,
a CRC calculation logic of a CRC generator (13A; 23A; 33A) calculating a CRC checksum, which the frame (40; 60; 70; 600; 700) comprises, and
a value "1" being inserted into the CRC calculation logic of the CRC checksum in an evaluation step before the evaluation of the next transmitted bit if in the continuous calculation carried out by the CRC calculation logic a value of "0....0" is found for the CRC checksum.

2. Method according to claim one of the preceding claims, an initialization vector of the CRC checksum having the value "1...0".

3. Method according to one of the preceding claims, the frame (40; 60; 70; 600; 700) having a header part (41, 41A, 42; 61 to 63; 71 to 73), a data part (43, 44, 45; 64; 74; 640; 740) and an end part (46; 65; 75; 650; 750), and/or
the header part (41, 41A, 42; 61 to 63; 71 to 73) having an identifier (41, 41A; 62; 72).

4. Method according to one of the preceding claims,
the frame (40; 60; 70; 600; 700) being a CAN frame (40) or a TTCAN frame (40) or a CAN FD frame (60; 70; 600; 700).

5. A subscriber station (10; 20; 30) for a bus system (1), with
a transmitting/receiving device (13; 23; 33) for transmitting a frame (40; 60; 70; 600; 700) to and/or receiving a frame (40; 60; 70; 600; 700) from a further subscriber station of the bus system (1), with which the frame (40; 60; 70; 600; 700) can be transmitted from a transmitter to at least one receiver by means of serial transmission via a bus line (3), and
a verifying device (12; 22; 32) for verifying a CRC checksum of the frame (40; 60; 70; 600; 700), which is to be calculated by a CRC calculation logic of a CRC generator (13A; 23A; 33A),
the transmitting/receiving device (13; 23; 33) being designed so as, before sending a frame (40; 60; 70; 600; 700), to insert stuff bits (52) into the frame (40; 60; 70; 600; 700) according to a predetermined rule to generate additional signal edges and/or so as, when evaluating a received frame (40; 60; 70; 600; 700), to remove the stuff bits (52) again,
the verifying device (12; 22; 32) being designed so as to insert a value "1" into the CRC calculation logic of the CRC checksum in an evaluation step before the evaluation of the next transmitted bit if in the continuous calculation carried out by the CRC calculation logic a value of "0....0" is found for the CRC checksum.

6. Bus system (1), with
a bus line (3), and
at least two subscriber stations (10, 20, 30), which can be connected to one another via the bus line (3) in such a way that they can communicate with one another,
at least one of the at least two subscriber stations (10, 20, 30) being a subscriber station (10; 20; 30) according to Claim 5.

## Revendications

1. Procédé de transmission série d'une trame (40 ; 60 ; 70 ; 600 ; 700) par l'intermédiaire d'une ligne bus (3) d'un émetteur à au moins un récepteur,
dans lequel des bits de remplissage (52) sont introduits par l'émetteur conformément à une règle prédéterminée dans la trame (40 ; 60 ; 70 ; 600 ; 700) afin de générer des fronts de signaux supplémentaires,
dans lequel les bits de remplissage (52) sont retirés par le récepteur lors d'une évaluation d'une trame (40 ; 60 ; 70 ; 600 ; 700) reçue,
dans lequel une logique de calcul CRC d'un générateur CRC (13A ; 23A ; 33A) calcule une somme de contrôle CRC qui comprend la trame (40 ; 60 ; 70 ; 600 ; 700), et
dans lequel, lors d'une étape d'évaluation précédant l'évaluation du bit transmis suivant, une valeur "1" est introduite dans la logique de calcul CRC de la somme de contrôle CRC si, dans le calcul en cours d'exécution par la logique de calcul CRC, une valeur "0...0" est déterminée pour la somme de contrôle CRC.

2. Procédé selon la revendication l'une quelconque des revendications précédentes,
dans lequel un vecteur d'initialisation de la somme de contrôle CRC présente la valeur "1...0".

3. Procédé selon l'une quelconque des revendications précédentes,
dans lequel la trame (40 ; 60 ; 70 ; 600 ; 700) comporte une partie de tête (41, 41A, 42 ; 61 à 63 ; 71 à 73), une partie de données (43, 44, 45 ; 64 ; 74 ; 640 ; 740) et une partie finale (46 ; 65 ; 75 ; 650 ; 750), et/ou dans lequel la partie de tête (41, 41A, 42 ; 61 à 63 ; 71 à 73) comporte un identifiant (41, 41A ; 62 ; 72).

4. Procédé selon l'une quelconque des revendications précédentes,
dans lequel la trame (40 ; 60 ; 70 ; 600 ; 700) est une trame CAN (40) ou une trame TTCAN (40) ou une trame CAN FD (60 ; 70 ; 600 ; 700).

5. Station participante (10 ; 20 ; 30) destinée à un système de bus (1), comportant
un dispositif d'émission/réception (13 ; 23 ; 33) servant à émettre une trame (40 ; 60 ; 70 ; 600 ; 700) et/ou à recevoir une trame (40 ; 60 ; 70 ; 600 ; 700) à l'intention/en provenance d'une autre station participante du système bus (1), au moyen duquel la trame (40 ; 60 ; 70 ; 600 ; 700) peut être transmise par l'intermédiaire d'une ligne de bus (3) par transmission série d'un émetteur à au moins un récepteur, et
un dispositif de sécurité (12 ; 22 ; 32) servant à sécuriser une somme de contrôle CRC de la trame (40 ; 60 ; 70 ; 600 ; 700), qui doit être calculée par une logique de calcul CRC d'un générateur CRC (13A ; 23A ; 33A),
dans lequel le dispositif d'émission/réception (13 ; 23 ; 33) est conçu, avant l'émission d'une trame (40 ; 60, 70 ; 600 ; 700), pour introduire des bits de remplissage (52) dans la trame (40 ; 60 ; 70 ; 600 ; 700) selon une règle prédéterminée afin de générer des flux de signaux supplémentaires et/ou pour retirer les bits de remplissage (52) lors de l'évaluation d'une trame (40 ; 60 ; 70 ; 600 ; 700) reçue,
dans lequel le dispositif de sécurité (12 ; 22 ; 32) est conçu, lors d'une étape d'évaluation, pour introduire une valeur "1" dans la logique de calcul CRC de la somme de contrôle CRC avant l'évaluation du bit transmis suivant, si, dans le calcul en cours d'exécution par la logique de calcul CRC, une valeur "0...0" est déterminée pour la somme de contrôle CRC.

6. Système de bus (1), comportant
une ligne de bus (3), et
au moins deux stations participantes (10, 20, 30) qui peuvent être reliées entre elles par la ligne de bus (3) de manière à ce qu'elles puissent communiquer entre elles,
dans lequel au moins l'une des deux stations participantes (10, 20, 30) est une station participante (10 ; 20 ; 30) selon la revendication 5.
